(19) Europäisches Patentamt
European Patent Office
Office européen des brevets

(11) EP 0 778 687 A2

(12) **EUROPÄISCHE PATENTANMELDUNG**

(43) Veröffentlichungstag:
11.06.1997 Patentblatt 1997/24

(51) Int. Cl.⁶: **H04L 25/03**

(21) Anmeldenummer: 96115258.4

(22) Anmeldetag: 24.09.1996

(84) Benannte Vertragsstaaten:
AT BE CH DE DK ES FI FR GB GR IE IT LI NL PT SE

(30) Priorität: 06.12.1995 DE 19545473

(71) Anmelder: **KE KOMMUNIKATIONS-ELEKTRONIK GMBH & CO**
**D-30179 Hannover (DE)**

(72) Erfinder:
• **Huber, Johannes, Prof. Dr.-Ing.**
**91094 Langensendelbach (DE)**

• **Benndorf, Jens, Dr.**
**31535 Neustadt (DE)**
• **Volkers, Hans, Dr.**
**30167 Hannover (DE)**
• **Hempel, Ralph**
**31535 Neustadt (DE)**

(74) Vertreter: **Döring, Roger, Dipl.-Ing.**
**Kabelkamp 20**
**30179 Hannover (DE)**

(54) **Bestimmung der Zweigmetriken in einem Viterbi-Entzerrer**

(57) Es wird ein Verfahren zur digitalen Nachrichtenübertragung über ein elektrisches Kabel angegeben, bei welchem die Symbole eines zu übertragenden Datenstroms nach einer digitalen/analogen Umsetzung als Sendesignal der Übertragungsstrecke zugeführt werden. Zur Weiterverarbeitung des auf der Empfangsseite abgetasteten Signals wird ein auf der Grundlage eines Trellisdiagramms arbeitender Viterbi-Decoder eingesetzt, welcher zur Bestimmung von Zweigmetriken und Pfadmetriken im Trellisdiagramm eine Anzahl von Rückkopplungsfiltern verwendet, die abhängig von der Anzahl von Zuständen im Trellisdiagramm ist. Zur Bestimmung der Zweigmetriken im Trellisdiagramm werden getrennte erste Rückkopplungsfilter (8) nur bis zu einer vorgebbaren Anzahl von Symbolintervallen im Trellisdiagramm bzw. bis zu einer vorgebbaren Länge der Rückkopplungsfilter für alle Zustände im Trellisdiagramm eingesetzt. Für die weiteren Symbolintervalle im Trellisdiagramm wird auf ein gemeinsames Rückkopplungsfilter (9) übergegangen, dem die Symbole des Pfades mit der geringsten Pfadmetrik im Trellisdiagramm zum Ende der ersten Rückkopplungsfilter (8) zugeführt werden.

Fig. 4

EP 0 778 687 A2

**Beschreibung**

Die Erfindung bezieht sich auf ein Verfahren zur digitalen Nachrichtenübertragung über ein elektrisches Kabel, bei welchem die Symbole eines zu übertragenden Datenstroms nach einer digitalen/analogen Umsetzung als Sendesignal einer Übertragungsstrecke zugeführt werden, bei welchem das übertragene Signal am Ende der Übertragungsstrecke abgetastet und anschließend weiterverarbeitet sowie einem Entscheider zugeführt wird und bei welchem zur Weiterverarbeitung des abgetasteten Signals ein auf der Grundlage eines Trellisdiagramms arbeitender Viterbi-Decoder eingesetzt wird, welcher zur Bestimmung von Zweigmetriken und Pfadmetriken im Trellisdiagramm eine Anzahl von Rückkopplungsfiltern verwendet, die abhängig von der Anzahl von Zuständen im Trellisdiagramm ist, mit in Reihe liegenden Filtertaps nach dem Delayed Decision Feedback Sequence Estimation-Algorithmus (US-Z "IEEE Transactions on Communications", VOL. 37, No. 5, Mai 1989, Seiten 428 bis 436).

Bei der digitalen Nachrichtenübertragung über bandbegrenzte Kanäle, wie z. B. Kupferkabel im Ortsanschlußnetz, treten Störungen in Form von Intersymbolinterferenzen, Rauschen und Impulsrauschen auf, welche zu einer Einschränkung der maximalen Übertragungsreichweite führen. Mit Hilfe adaptiver Entzerrungsmethoden, welche auf digitalen Filteralgorithmen beruhen, kann eine weitestgehende Entzerrung der Intersymbolinterferenzen erreicht werden. Jedoch ist die Leistungsfähigkeit solcher meist linearer Filteralgorithmen durch begrenzte Wortlängen der digitalen Signalverarbeitung und eine begrenzte Gesamtkomplexität sowie durch Rauschen und Nichtlinearitäten im analogen Schaltungsteil der Sende- und Empfangseinrichtungen begrenzt.

Eine Erhöhung der Übertragungsreichweite bzw. der Störresistenz ist beispielsweise mit Hilfe von optimalen Empfangsmethoden nach dem Maximum Likelihood Sequence Estimation(MLSE)-Prinzip möglich (US-Z "IEEE Transactions on Information Theory", Vol. IT-18, No. 3, Mai 1972, Seiten 363 bis 378). Aus dieser US-Z geht beispielsweise eine Realisierung eines MLSE-Empfängers hervor. Dabei wird der Übertragungskanal als "finite state machine" betrachtet. Mit einem Viterbi-Algorithmus (US-Z "Proceedings of the IEEE", Vol. 61, März 1973, Seiten 268 bis 277) wird eine Schätzung der gesendeten Signalfolge über die Kanalzustände nach dem Maximum Likelihood-Kriterium durchgeführt.

Ein prinzipielles Problem bei der Realisierung von MLSE-Algorithmen ist die Proportionalität von Komplexität (Anzahl der eingesetzten Gatter) und Anzahl der Zustände im Trellisdiagramm, welche ihrerseits exponentiell mit dem Kanalgedächtnis steigt, d. h. mit der Länge der Impulsantwort des dispersiven Übertragungskanals. Der aus der eingangs erwähnten US-Z ebenfalls bekannte Delayed Decision Feedback Sequence Estimation (DDFSE)-Algorithmus ist eine Methode zur Verringerung der Anzahl der Zustände im Trellisdiagramm. Wie im Viterbi-Algorithmus beschreiben auch hier die Zustände alle Zustandsvarianten des als "finite state machine" betrachteten Kanals in einem festgelegten Zeitintervall von $\mu$ Symbolen. Während jedoch beim MLSE-Algorithmus $\mu$ identisch mit der Länge des Kanalgedächtnisses ist, kann beim DDFSE-Algorithmus $\mu$ frei gewählt werden. Das heißt, selbst bei einem unendlich langen Kanalgedächtnis kann ein endliches $\mu$ verwendet werden.

Beim DDFSE-Algorithmus repräsentiert jeder Zustand im Trellisdiagramm nur einen Teil der Information über den aktuellen Kanalzustand. Der Rest der Information wird mit den höchstwahrscheinlichen Sendesymbolen geschätzt, welche den vorangegangenen Pfadentscheidungen entsprechen und in einem Pfadspeicher abgelegt sind. Der DDFSE-Algorithmus vereinigt die Eigenschaften des Viterbi-Algorithmus mit denen einer entscheidungsrückgekoppelten Entzerrung (Decision Feedback Equalisation). Man kann sich den DDFSE-Algorithmus auch als Struktur mit $X^{\mu}$ Rückkopplungsfiltern vorstellen, bei welchen die Filtertaps der eingesetzten Rückkopplungsfilter in jedem Symbolintervall mit verschiedenen Empfangssymbolen gespeist werden. Darin ist X die Anzahl der möglichen Symbole bzw. Amplitudenstufen pro Schritt. Die Kombination von Symbolen in einem der Rückkopplungsfilter, welche zum geringsten Fehler am Entscheider führt, ist das Optimum im Maximum Likelihood-Sinne.

Die Komplexität des DDFSE-Algorithmus steigt exponentiell mit dem Parameter $\mu$, d. h. mit der Anzahl der in den Zuständen desselben berücksichtigten Symbole, bzw. proportional zu der Anzahl der Zustände im Trellisdiagramm. Der Gewinn des DDFSE-Algorithmus steigt mit wachsendem $\mu$ sowie mit wachsender Länge n-$\mu$ der Rückkopplungsfilter bei der Zweigmetrikbestimmung. n gibt dabei die Anzahl von Filtertapoperationen zur Zweigmetrikbestimmung pro Zustand des Trellisdiagramms an, welche im folgenden gleich der Anzahl der Nachl ufer der zeitdiskreten Kanalimpulsantwort gesetzt wird. Jede Filtertapoperation besteht aus einer Addition, einer Multiplikation und einer Registeroperation. Der Aufbau ausreichend langer Rückkopplungsfilter für alle Zustände im Trellisdiagramm erfordert eine hohe Anzahl von logischen Gattern sowie einen erheblichen schaltungstechnischen Aufwand.

Der Erfindung liegt die Aufgabe zugrunde, das eingangs geschilderte, mit dem DDFSE-Algorithmus arbeitende Verfahren weiter zu vereinfachen.

Diese Aufgabe wird gemäß der Erfindung dadurch gelöst,

- daß zur Bestimmung der Zweigmetriken im Trellisdiagramm getrennte erste Rückkopplungsfilter nur bis zu einer vorgebbaren Anzahl von Symbolintervallen im Trellisdiagramm bzw. bis zu einer vorgebbaren Länge der Rückkopplungsfilter für alle Zustände im Trellisdiagramm eingesetzt werden und
- daß für die weiteren Symbolintervalle im Trellisdiagramm auf ein gemeinsames Rückkopplungsfilter übergegangen wird, dem die Symbole des Pfades mit der geringsten Pfadmetrik im Trellisdiagramm zum Ende der ersten Rückkopplungsfilter zugeführt werden.

Bei diesem Verfahren wird jedes der eingesetzten Rückkopplungsfilter in zwei Teile aufgespalten. Der erste Teil enthält den Anteil der Zweigmetrik, welcher pro Pfad im Trellisdiagramm unterschiedlich sein kann. Der zweite Teil wird für alle Pfade nur einmal entlang des Pfades mit der zum Ende der ersten Teile der Rückkopplungsfilter geringsten Pfadmetrik bestimmt. Es wird dadurch die aus der Theorie des Viterbi-Algorithmus bekannte Tatsache ausgenutzt, daß alle Pfade im Trellisdiagramm nach einer bestimmten Anzahl von Symbolen bzw. Symbolintervallen zusammenlaufen ("path merging"). Beim DDFSE-Algorithmus entspricht das einer Angleichung des letzten Teils der Zweigmetriksummen, da für alle Pfade die letzten Symbole mit hoher Wahrscheinlichkeit gleich sind und auf einem "überlebenden" Pfad liegen. Der Einfluß dieser letzten Symbole bzw. Koeffizienten der Rückkopplungsfilter des überlebenden Pfades auf die Zweigmetrik kann zwar gering sein. Eine vollständige Vernachlässigung derselben kann aber zu einer deutlichen Degradation des Algorithmus durch nicht berücksichtigte Impulsinterferenzen führen. Bei diesem Verfahren werden daher diese letzten Koeffizienten nicht vernachlässigt, sondern durch das gemeinsame Rückkopplungsfilter berücksichtigt. Da mit den ersten Rückkopplungsfiltern für alle Zustände des Trellisdiagramms Rückkopplungsfilter aber nur für eine begrenzte Anzahl von Symbolintervallen eingesetzt werden, während für die folgenden Symbolintervalle das gemeinsame Rückkopplungsfilter verwendet wird, kann die Anzahl von Filtertapoperationen bzw. Gattern wesentlich vermindert werden. Das bedeutet eine erhebliche Vereinfachung des schaltungstechnischen Aufwandes, ohne daß die Entscheidungen wesentlich beeinflußt werden.

Das Verfahren hat den weiteren Vorteil, daß für die Speicherung der Zustandsfolgen des Trellisdiagramms in einem zum Viterbi-Decoder gehörenden Pfadspeicher das bekannte Register-Exchange-Verfahren (US-Buch von G.C. Clark, J. B. Cain, "Error Correction Coding for Digital Communications", New York, Plenum, 1981) eingesetzt werden kann. Bei diesem Verfahren lassen sich die Pfadspeicherzellen direkt an die Multiplizierer der Rückkopplungsfilter anschließen. Die Pfadrückverfolgung im Trellisdiagramm wird dadurch besonders einfach.

Das Verfahren nach der Erfindung wird anhand der Zeichnungen als Ausführungsbeispiel erläutert.

Es zeigen:

Fig. 1 ein Blockschaltbild für einen Empfänger mit nur einem Rückkopplungsfilter.
Fig. 2 ein Blockschaltbild eines Viterbi-Decoders.
Fig. 3 ein Trellisdiagramm.
Fig. 4 einen nach dem Verfahren gemäß der Erfindung arbeitenden Metrikgenerator.
Fig. 5 ein Diagramm der Abhängigkeit der Bitfehlerrate von der Anzahl der Filtertapoperationen.
Fig. 6 ein Blockschaltbild eines im Viterbi-Decoder verwendbaren Pfadspeichers mit Datenpfaden beim Register-Exchange-Verfahren.
Fig. 7 ein Blockschaltbild des Pfadspeichers mit Steuerpfaden beim Register-Exchange-Verfahren.

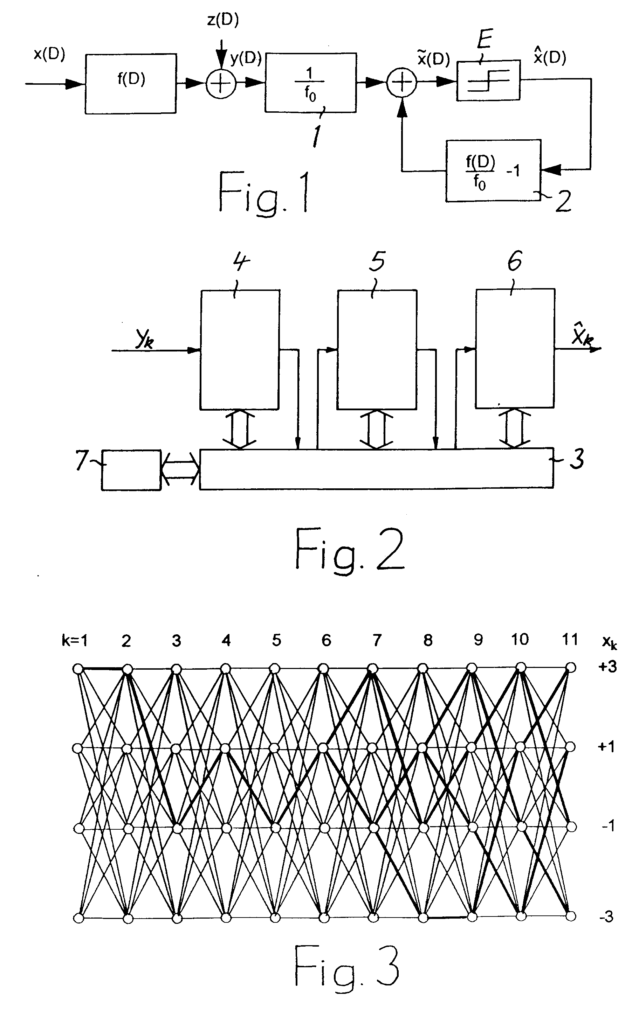

Wie weiter oben bereits ausgeführt, steigt die Anzahl der in den Rückkopplungsfiltern eingesetzten Filtertaps bzw. Gatter mit der Anzahl der Zustände der Abtastwerte, welche ihrerseits von der Anzahl $\mu$ der über Trelliszustände repräsentierten Symbole abhängen. Für den Fall $\mu = 0$ reduziert sich der DDFSE-Empfänger auf einen DFE-Empfänger entsprechend dem Blockschaltbild nach Fig. 1. Die Beschreibung dieses Blockschaltbilds erfolgt mit Hilfe einer D-Transformation, wobei "D" für "Delay" steht. Delay bedeutet dabei Verzögerung um einen Symboltakt.

Eine Sequenz $(y_0, y_1 ...)$ von Abtastwerten aus dem Empfangssignal wird weiterverarbeitet und einem Entscheider E zugeführt. Für die Weiterverarbeitung werden ein Vorwärtsfilter 1 und ein Rückkopplungsfilter 2 eingesetzt. Die Sendesequenz $(x_0, x_1 ...)$, deren D-Transformierte

$$x(D) = x_0 + x_1 D + x_2 D^2 + ...$$

lautet, wird im Kanal mit den Abtastwerten der Kanalimpulsantwort mit der D-Transformierten $f(D)$ gefaltet, die hier zur Vereinfachung nur aus dem Hauptwert $f_0$ und Nachläufern $f_1$ bis $f_n$ bestehend angenommen ist, und mit normiertem, mittelwertfreiem Gaußschen Rauschen beaufschlagt. Bei einer günstigen Wahl des analogen Empfängereingangsfilters und einer eventuellen nachfolgenden digitalen Filterung, ist das Rauschen in diesem zeitdiskreten Ersatzschaltbild zudem näherungsweise weiß. Für die D-Transformierte der Folge von Abtastwerten gilt:

$$y(D) = f(D)x(D) + z(D).$$

Darin bezeichnet $z(D)$ die D-Transformierte der Folge von Störabtastwerten.

Die anhand von Fig. 1 erläuterte DFE-Entzerrung mit nur einem Rückkopplungsfilter 2 ist beim hier angewendeten DDFSE-Algorithmus durch den Viterbi-Algorithmus mit einer der Anzahl der Zustände $X^\mu$ im Trellisdiagramm entsprechenden Anzahl von Rückkopplungsfiltern ergänzt, die aus einer großen Anzahl von Filtertaps aufgebaut sind. Fig. 2 zeigt den schematischen Aufbau eines nach dem Viterbi-Algorithmus arbeitenden Decoders, der auf Grundlage eines in Fig. 3 dargestellten Trellisdiagramms arbeitet.

Der aus Fig. 2 im Blockschaltbild ersichtliche Viterbi-Decoder weist einen Pfadspeicher 3 auf, an den ein Metrikgenerator 4, eine ACS-Einheit 5, ein Entscheider 6 und eine Steuereinheit 7 angeschlossen sind. Die Buchstaben ACS stehen für die Worte "Add", "Compare" und "Select". Der aktuelle Abtastwert $y_k$ wird dem Metrikgenerator 4 aufgegeben. Der entschiedene Wert $\hat{x}_k$ steht am Ausgang des Entscheiders 6 an. Die Steuereinheit 7 steuert das Zusammenwirken der Teile 3 bis 6 des Viterbi-Decoders.

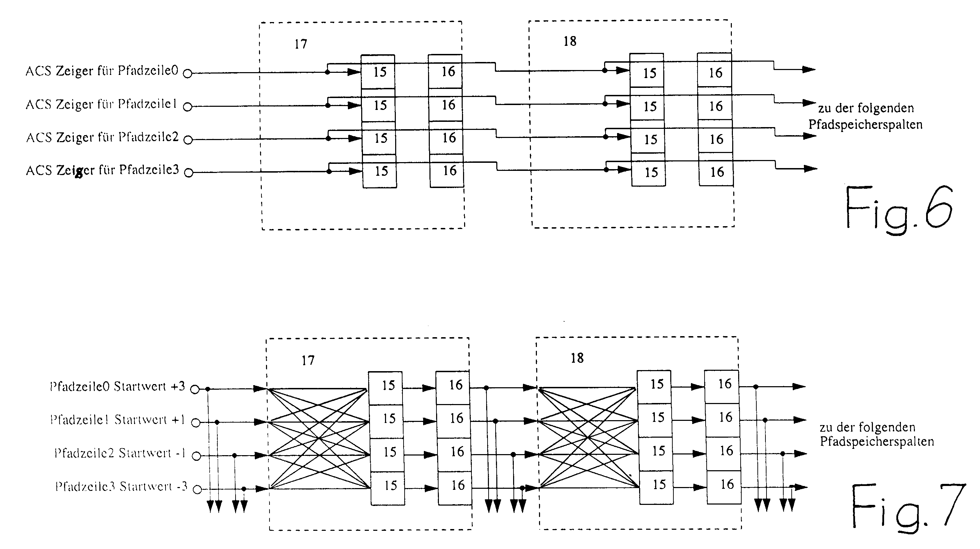

Die Aufgabe des Pfadspeichers 3 besteht in der Speicherung der Zustandsfolgen der $X^\mu$ überlebenden Pfade im Trellisdiagramm. Die Auswahl des überlebenden Pfades mit der geringsten Pfadmetrik kann nach dem Rückverfolgungs-Algorithmus und nach dem schon erwähnten Register-Exchange-Verfahren (Fig. 6 und 7) erfolgen. In Fig. 6 und 7 ist der Pfadspeicher als Beispiel mit $\mu=1$ dargestellt.

In den Fig. 6 und 7 sind mit 15 Multiplexer bezeichnet, die vier Eingänge für je zwei Bit und einen Steuereingang haben. Es sind außerdem Register 16 mit einem Eingang und einem Ausgang für je zwei Bit vorhanden. Eine erste der n Multiplexer-Register Stufen ist mit 17 bezeichnet, eine zweite mit 18. In Fig. 6 ist der Anschluß der Steuereingänge der Multiplexer 15 dargestellt. Fig. 7 zeigt den Anschluß der Dateneingänge der Multiplexer 15.

Beim Rückverfolgungs-Algorithmus werden in jedem Symboltakt ein Pfad, nämlich der mit der besten Pfadmetrik, über der Speichertiefe des Pfadspeichers 3 zurückverfolgt und die Information ausgegeben, die das Ende der Rückverfolgung markiert. Dabei werden Zeiger auf Zustände gespeichert und bei der Rückverfolgung ausgewertet.

Bei dem weniger aufwendigen und hier mit Vorteil eingesetzten Register-Exchange-Verfahren nach den Fig. 6 und 7 werden keine Zeiger, sondern direkt Zustandsinformationen gespeichert. Der Zustandsinformationsspeicher des Register-Exchange-Verfahrens besteht aus einer Matrix mit $X^\mu$ Zeilen und n Stufen von je ld(X) Bit breiten Speichern, welche die Zustandsinformationen beinhalten. Die ersten beiden der n Stufen sind in den Fig. 6 und 7 mit 17 und 18 bezeichnet. Zwischen jeder Stufe befinden sich die Multiplexer 15. Am Eingang der ersten Multiplexer 15 in Stufe 17 (Fig. 7) stehen konstante Zustandsinformationen an. Diese Zustandsinformationen der $X^\mu$ Zeilen entsprechen dem Wert, mit dem der Koeffizient $f_1$ multipliziert wird, um zur Zweigmetrik des betrachteten Zustands $\nu$ verrechnet zu werden, mit $\nu \, \varepsilon \, [1,2,..., X^\mu]$.

Alle Multiplexer der $\nu$-ten Zeile werden wie der Zeiger der aktuellen ACS-Operation des $\nu$-ten Zustandes eingestellt. Dann werden durch einmaliges Takten der Register 16 die Inhalte auf dem durch die Multiplexer 15 eingestellten Pfad weitergereicht. Dabei sind die Zustandsinformationen in den ersten Stufen 17 und 18 unterschiedlich. Bei jedem Weiterreichen in folgende Stufen besteht jedoch die Möglichkeit des Überschreibens von Zustandsinformationen. Die Stufe, in der alle Zustandsinformationen identisch sind, nennt man die Stufe, in der das oben erwähnte "path merging" stattgefunden hat. Danach bleiben die Zustandsinformationen aller Zeilen identisch.

Die $X^\mu$ Zeiger der ACS-Operation werden in jedem Symbolschritt sofort verwendet, um Zustandsinformationen weiterzureichen.

Mit der Erkenntnis, daß sich die Zustandsinformationen der $X^\mu$ Pfade im Trellisdiagramm in den $X^\mu$ Pfadzeilen des Pfadspeichers 3 befinden, lassen sich die Ausgänge der Register 16 (Fig. 7), welche die Symbole entlang der Trellispfade enthalten, direkt an die Multiplizierer der $X^\mu$ privaten Rückkopplungsfilter anschließen. Der Pfadspeicher 3 nach dem Register-Exchange-Verfahren impliziert eine Umsortierung der datenabhängigen Pfade im Trellisdiagramm, so daß der $X^\mu$-te Pfad immer in die $X^\mu$-te Pfadspeicherzeile abgebildet wird. Die Symbole in den Pfadspeicherzeilen sind damit direkt die Eingangsinformationen für die Rückkopplungsfilter.

Ein Trellisdiagramm ist in Fig. 3 für ein quaternäres Sendesignal mit den vier Amplitudenstufen +3, +1, -1 und -3 für $\mu = 1$ dargestellt, d. h. für $4^1 = 4$ Zustände. Bei einem anders gearteten Sendesignal, beispielsweise einem binären, und einem anderen $\mu$ ergeben sich anders aufgebaute Trellisdiagramme. Bei einem Sendesignal mit vier Amplitudenstufen und bei $\mu = 2$ lägen beispielweise 16 Zustände mit 16 Rückkopplungsfiltern vor. An den Punkten $k_1$ bis $k_{11}$ des Trellisdiagramms nach Fig. 3 liegen die jeweiligen Zustände zu den Abtastzeitpunkten. Zwischen je zwei dieser Punkte liegt jeweils das Abtastintervall T. Von jedem der vier Zustände +3, +1, -1 und -3 gehen bei dem betrachteten Beispiel in jedem Abtastzeitpunkt vier Zweige aus, die zu jedem Zustand des folgenden bzw. vorangehenden Abtastzeitpunkts führen. Jedem dieser Zweige wird zur Wichtung eine Metrik zugeordnet. Die jeweilige Zweigmetrik entspricht dem Fehlermaß bzw. dem Störabstand am Entscheider 6 für den Fall, daß die Symbolfolge des dem betrachteten Zustand $\nu$ zugeordneten Pfades aus dem Pfadspeicher 3 (Fig. 2) empfangen worden wäre.

Zur Bestimmung der Zweigmetriken ZM für die einzelnen Zustände $\nu$ im Trellisdiagramm zum Zeitpunkt k für alle X möglichen aktuellen Symbole z wird folgende Gleichung verwendet:

$$ZM^\nu_k(z) = (y_k - f_0 z - f_1 x^\nu_{k-1} - ... - f_\mu x^\nu_{k-\mu} + \omega^\nu_{k-\mu-1})^2,$$

$$\text{mit } \omega^\nu_{k-\mu-1} = \underbrace{f_{\mu+1} x^\nu_{k-\mu-1} - ... - f_{\mu+\beta} x^\nu_{k-\mu-\beta}}_{\text{private DFE}} + \underbrace{f_{\mu+\beta+1} x^\nu_{k-\mu-\beta-1} - ... - f_n x^\nu_{k-n}}_{\text{gemeinsame DFE}}.$$

Darin sind:

| | |
|---|---|
| $ZM^{\nu}_k(z)$ | = Zweigmetrik für Zustand $\nu$ im k-ten Schritt |
| $y_k$ | = Abtastwert des empfangenen Symbols |
| $f_0$ | = Hauptwert der Kanalimpulsantwort |
| $f_1$ bis $f_n$ | = Nachläufer der Kanalimpulsantwort |
| n | = Anzahl der Nachläufer der zeitdiskreten Kanalimpulsantwort |
| $x^{\nu}_k$ | = Beim Zustand $\nu$ im Schritt k als gesendet vermutetes Symbol |
| z | = Im aktuellen Schritt als gesendet vermutetes Symbol (Amplitudenstufe) |
| $\omega^{\nu}_K$ | = Für den Zustand $\nu$ geschätzte Impulsinterferenzstörung durch Impulsnachläufer beim k+$\mu$+1-Schritt |
| X | = Anzahl der möglichen Amplitudenstufen pro Schritt |
| $\mu$ | = Anzahl der in den Zuständen des DDFSE-Algorithmus berücksichtigten Symbole bzw. Impulsnach-läufer |
| $\beta$ | = Anzahl der in den privaten DFE berücksichtigten Symbole |
| k | = Zeitindex |
| DFE | = Rückkopplungsfilter. |

Der mit "private DFE" bezeichnete Teil berücksichtigt den Teil der Rückkopplungsfilter, bei welchem für jeden Zustand im Trellisdiagramm ein Rückkopplungsfilter eingesetzt ist. Das sind zusammen die getrennten ersten Rückkopplungsfilter. Der mit "gemeinsame DFE" bezeichnete Teil erfaßt das für alle Zustände gemeinsame Rückkopplungsfilter.

Zum Zeitpunkt k ist jeder Zustand $\nu$ im Trellisdiagramm durch eine Kombination $(x^{\nu}_{k-l},..., x^{\nu}_{k-\mu})$ bestimmt. Bei $\mu$=1 ergibt sich die Zweigmetrik zu:

$$ZM^{\nu}_{k}(z) = (y_k - f_o z - f_l x^{\nu}_{k-l} - \omega^{\nu}_{k-2})^2,$$

wobei $\omega_{k-2}$ die Schätzung von

$$w^{\nu}_{k-2} = \sum_{i=2}^{n} f_i x^{\nu}_{k-i}$$

aus dem Pfadspeicher 3 von Fig. 2 zu dem entsprechenden Zustand im Trellisdiagramm darstellt.

Dieser Wert zerfällt in zwei Teile, nämlich in einen Anteil

$$p^{\nu}_{k-2} = \sum_{i=2}^{\beta+1} f_i x^{\nu}_{k-i},$$

der aus dem Pfad zu diesem Zustand in einer diesem Zustand zugeordneten privaten DFE gewonnen wird, und einen Anteil

$$c_{k-2} = \sum_{i=2}^{n} f_i \hat{x}_{k-i},$$

der aus einem für alle Zustände gemeinsamen DFE gewonnen wird. Dabei bezeichnet $\hat{x}_k$ das für den Schritt k bereits endgültig als gesendet geschätzte Symbol. Diesem gemeinsamen DFE wird in jedem Schritt das Symbol am Ausgang der $\beta$-1 Pfadspeicherspalte von demjenigen Zustand bzw. von der Pfadspeicherspalte zugeführt, das aktuell die beste, d. h. die kleinste Metrik hat. Das zugeführte Symbol wird in ein Schieberegister für die Daten (Symbole) des gemeinsamen DFE 9 hineingeschoben.

Die Zweigmetriken $ZM^{\nu}_k(z)$ werden für jeden Zustand $\nu$ und jedes mögliche aktuelle Symbol z nach obiger Gleichung bestimmt bzw. berechnet. Beim Folgezustand, also beim Übergang vom Schritt k zum Schritt k+1, wird für alle Zustände $\lambda$, mit $\lambda \, \varepsilon \, [1,2,..., X^{\mu}]$ jeweils von den Pfaden, die zu einem Folgezustand $\lambda$ führen, derjenige ausgewählt, für den die akkumulierte Pfadmetrik $PM_{k+1}(\lambda)$ am geringsten ist:

$$PM^{\lambda}_{k+1} = \min [ZM_K(z) + PM^{\nu}_K].$$

Diese akkumulierten Pfadmetriken $PM_{k+1}$ werden gespeichert und als Pfadmetrik $PM_k$ im Folgezustand verwendet. Neben den $X^{\mu}$ minimalen Pfadmetriken werden die zugehörigen $X^{\mu}$ Zeiger, d.h. die Indizes der $ZM_K(z)$ als ACS-Zeiger für die $X^{\mu}$ Steuereingänge des Pfadspeichers (siehe Fig. 6) verwendet. Danach wird der Pfadspeicher einmal getaktet, womit der Inhalt der i-ten Pfadspeicherspalte über der Multiplexer 15 an die i+1-te Pfadspeicherspalte weitergegeben wird. Nach dieser Taktung des Pfadspeichers werden erstens

- der Inhalt der letzten Pfadspeicherspalte, dessen Zeilennummer durch den Index $\lambda$ der kleinsten aller minimalen akkumulierten Pfadmetriken $PM_{min}$ bestimmt wird, als endgültig entschiedenes Symbol ausgegeben,

und zweitens

- der Inhalt der $\beta$-1 Pfadspeicherspalte, dessen Zeilennummer durch den Index i von $PM_{min}$ des Minimums aller $\nu$ minimalen akkumulierten Pfadmetriken bestimmt wird, als Symbol an das Schieberegister für die Daten (Symbole) des gemeinsamen DFE 9 ausgegeben.

Während in der pysikalischen Realisierung des Pfadspeichers die Symbole der $X^{\mu}$ Pfade sich in den $X^{\mu}$ Pfadspeicherzeilen befinden, ist es für die anschauliche Darstellung der Pfade übersichtlicher, diese wie im Beispiel von Fig. 3 gezeigt darzustellen. Die Pfade, die zu den minimalen akkumulierten Pfadmetriken $PM^{\lambda}_{k+1}$ gehören, sind in Fig. 3 jeweils dick eingezeichnet. Auf der linken Seite beginnt das Diagramm bei k=11 mit den $X^{\mu}$ möglichen Pfaden für die $X^{\mu}$ minimalen Pfadmetriken. Zu jedem Pfadanfang gehört ein $x_k$, wie in Fig. 3 eingezeichnet. Auf der rechten Seite verbleibt mit hoher Wahrscheinlichkeit nur der überlebende Pfad. Wie im Beispiel in Fig. 3 zu erkennen ist, laufen alle Pfade bei k=6 zusammen.

Der ab k=6 gemeinsame Pfad ist der entgültig entschiedene Pfad, der die kleinste $PM_{min}$ aller $X^{\mu}$ minimalen Pfadmetriken $PM_{k+1}$ hat. An seinem Ende auf der linken Seite bei k=1 wird das Symbol $\hat{x}_1 = 3$ als endgültig entschieden ausgegeben, mit dem dieser Pfad bei k=11 begonnen hat.

Der in Fig. 4 schematisch dargestellte Metrikgenerator 4 ist entsprechend Fig. 3 für ein quaternäres Sendesignal aufgebaut. Für $\mu$=1 ist jeder der Amplitudenstufen +3, +1, -1 und -3 ein privates bzw. erstes Rückkopplungsfilter 8 mit einer vorgebbaren Anzahl $\beta$ von Filtertaps zugeordnet. Jedes Filtertap besteht aus einer Speicherzelle, einem Multiplizierer und einem Addierer. Der Anschluß der Speicherzellen ist in Fig. 7 gezeigt. Die Filtertaps sind in einer Art Schieberegister in Reihe geschaltet und bilden ein sogenanntes "FIR-Filter". Sie sind aus einer großen Anzahl von Gattern aufgebaut.

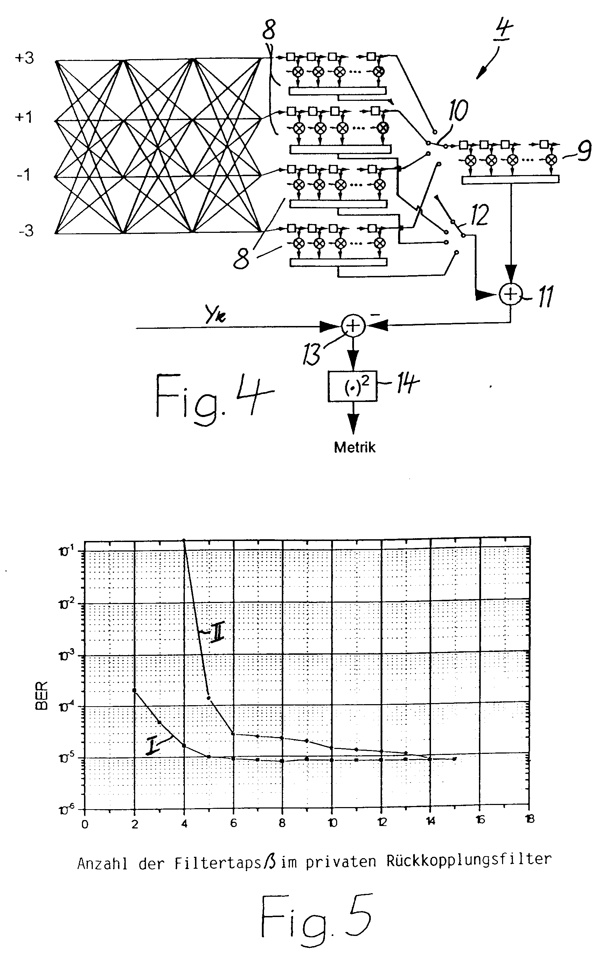

Die privaten bzw. ersten Rückkopplungsfilter 8 werden zur Bestimmung der Zweigmetriken für den Anteil eingesetzt, der pro Pfad im Pfadspeicher 3 unterschiedlich ist. Das gilt für das in Fig. 3 dargestellte Trellisdiagramm also zurück bis zum Zeitpunkt k=6. Für den weiteren Anteil der Zweigmetriken wird für alle Amplitudenstufen des Sendesignals bzw. für alle Zustände nur noch ein gemeinsames Rückkopplungsfilter 9 verwendet. Es wird jeweils für den Pfad mit der geringsten akkumulierten Pfadmetrik $PM^{\nu}_{k+1}$ verwendet, was durch den Wahlschalter 10 angedeutet sein soll. Die Länge der privaten bzw. ersten Rückkopplungsfilter 8 bzw. die Anzahl $\beta$ von Filtertaps wird stets so gewählt, daß die Bitfehlerrate in einer Simulation nach Fig. 5 gerade ein Minimum erreicht. Sinnvolle Längen der privaten bzw. ersten Rückkopplungsfilter 8 ergeben sich bei den beschriebenen Beispiel (Fig. 5) für $\beta$=5 und $\beta$=6.

Die jeweiligen Summen aus den Rückkopplungsfiltern 8 und 9 werden nach Maßgabe des jeweils betrachteten Pfades mit der geringsten Pfadmetrik im Summierpunkt 11 addiert. Für das jeweils geltende private bzw. erste Rückkopplungsfilter 8 ist ein Wahlschalter 12 eingezeichnet. Die Summe der so bestimmten und geschätzten Intersymbolinterferenzen durch Kanalimpulsnachläufer wird im Summierpunkt 13 vom Abtastwert $y_k$ subtrahiert, wodurch die angenommene, dem betrachteten Zustand entsprechende und durch frühere Sendesymbole erzeugte Interferenz beseitigt wird. Mit Hilfe des Quadrierers 14 wird schließlich die Zweigmetrik $ZM^{\nu}_K(z)$ gebildet.

Die Kurven I und II von Fig. 5 geben für $\mu$=1 und X=4, also für vier Zustände im Trellisdiagramm, die Abhängigkeit der Bitfehlerrate BER von der Anzahl $\beta$ der im jeweiligen privaten bzw. ersten Rückkopplungsfilter 8 berücksichtigten Abtastwerte der Nachläufer der Kanalimpulsanwort für das eingesetzte Kabel an. Dabei werden die in den privaten bzw. ersten Rückkopplungsfiltern 8 (Fig. 4) nicht berücksichtigten n-$\beta$-$\mu$ Impulsnachläufer im gemeinsamen Rückkopplungsfilter 9 bestimmt. Wie zu erkennen ist, erreicht das Verfahren nach der Erfindung gemäß Kurve I bereits bei $\beta$=5 annähernd das Minimum der Bitfehlerrate. Bei Anwendung des bekannten DDFSE-Algorithmus ohne zusätzliche gemeinsame DFE nähert sich die Bitfehlerrate gemäß Kurve II erst bei $\beta > 12$ diesem Bereich an, da für $\beta < 12$ durch unberücksichtigte Impulsnachläufer eine starke Degradation eintritt. Mit vorliegendem Verfahren kann daher die Zahl der Filtertapoperationen gegenüber dem DDFSE-Algorithmus bei gleicher Leistung auf weniger als die Hälfte verringert werden.

**Patentansprüche**

1. Verfahren zur digitalen Nachrichtenübertragung über ein elektrisches Kabel, bei welchem die Symbole eines zu übertragenden Datenstroms nach einer digitalen/analogen Umsetzung als Sendesignal der Übertragungsstrecke zugeführt werden, bei welchem das übertragene Signal am Ende einer Übertragungsstrecke abgetastet und anschließend weiterverarbeitet sowie einem Entscheider zugeführt wird und bei welchem zur Weiterverarbeitung des abgetasteten Signals ein auf der Grundlage eines Trellisdiagramms arbeitender Viterbi-Decoder eingesetzt wird, welcher zur Bestimmung von Zweigmetriken und Pfadmetriken im Trellisdiagramm eine Anzahl von Rückkopplungsfiltern verwendet, die abhängig von der Anzahl von Zuständen im Trellisdiagramm ist, mit in Reihe liegenden Filtertaps nach dem Delayed Decision Feedback Sequence Estimation-Algorithmus, <u>dadurch gekennzeichnet,</u>

   - daß zur Bestimmung der Zweigmetriken im Trellisdiagramm getrennte erste Rückkopplungsfilter (8) nur bis zu einer vorgebbaren Anzahl von Symbolintervallen im Trellisdiagramm bzw. bis zu einer vorgebbaren Länge der Rückkopplungsfilter für alle Zustände im Trellisdiagramm eingesetzt werden und
   - daß für die weiteren Symbolintervalle im Trellisdiagramm auf ein gemeinsames Rückkopplungsfilter (9) übergegangen wird, dem die Symbole des Pfades mit der geringsten Pfadmetrik im Trellisdiagramm zum Ende der ersten Rückkopplungsfilter (8) zugeführt werden.

2. Verfahren nach Anspruch 1, <u>dadurch gekennzeichnet,</u> daß die Zweigmetriken im Trellisdiagramm nach folgenden Termen gebildet wird:

$$ZM^{\nu} = (y_k - f_0 z - f_1 x^{\nu}_{k-l} - \ldots - f_{\mu} x^{\nu}_{k-\mu} + \omega^{\nu}_{k-\mu-l})^2,$$

$$\text{mit } \omega^{\nu}_{k-\mu-l} = \underbrace{f_{\mu+l} x^{\nu}_{k-\mu-l} - \ldots - f_{\mu+\beta} x^{\nu}_{k-\mu-\beta}}_{\text{private DFE}} + \underbrace{f_{\mu+\beta+l} x^{\nu}_{k-\mu-\beta-l} - \ldots - f_n x^{\nu}_{k-n}}_{\text{gemeinsame DFE}}$$

   mit:

   | | |
   |---|---|
   | $ZM^{\nu}_k(z)$ | = Zweigmetrik für den Zustand $\nu$ im k-ten Schritt |
   | $y_k$ | = Abtastwert des empfangenen Symbols |
   | $f_0$ | = Hauptwert der Kanalimpulsantwort |
   | $f_1$ bis $f_n$ | = Nachläufer der Kanalimpulsantwort |
   | $n$ | = Anzahl der Nachläufer der zeitdiskreten Kanalimpulsantwort |
   | $x^{\nu}_k$ | = Beim Zustand $\nu$ im Schritt k als gesendet vermutetes Symbol |
   | $z$ | = Im aktuellen Schritt als gesendet vermutetes Symbol (Amplitudenstufe) |
   | $\omega^{\nu}_K$ | = Für den Zustand $\nu$ geschätzte Impulsinterferenzstörung durch Impulsnachläufer beim k+$\mu$+1-Schritt |
   | $X$ | = Anzahl der möglichen Amplitudenstufen pro Schritt |
   | $\mu$ | = Anzahl der in den Zuständen des DDFSE-Algorithmusses berücksichtigten Symbole bzw. Impulsnachläufer |
   | $\beta$ | = Anzahl der in den privaten DFE berücksichtigten Symbole |
   | $k$ | = Zeitindex |
   | DFE | = Rückkopplungsfilter. |

3. Verfahren nach Anspruch 1 oder 2, <u>dadurch gekennzeichnet,</u> daß ein Pfadspeicher (3) nach dem Prinzip des Register-Exchange-Verfahrens zur Bereitstellung der Daten der ersten Rückkopplungsfilter (8) verwendet wird.

4. Verfahren nach Anspruch 1 oder 3, <u>dadurch gekennzeichnet,</u> daß das Eingangsdatum des gemeinsamen Rückkopplungsfilters (9) mit Hilfe des Zeigers aus einer ACS-Einheit des Viterbi-Decoders auf den aktuellen besten Pfad und dem Pfadspeicherinhalt gewonnen wird.

5. Verfahren nach Anspruch 1 oder 2, <u>dadurch gekennzeichnet,</u> daß ein Pfadspeicher (3) nach dem Prinzip des Rückverfolgungs-Algorithmus zur Bereitstellung der Daten der ersten Rückkopplungsfilter (8) verwendet wird.

Fig. 1

Fig. 2

Fig. 3

Fig. 4

Anzahl der Filtertaps $\beta$ im privaten Rückkopplungsfilter

Fig. 5

ACS Zeiger für Pfadzeile0

ACS Zeiger für Pfadzeile1

ACS Zeiger für Pfadzeile2

ACS Zeiger für Pfadzeile3

17

18

15 16 15 16

15 16 15 16

15 16 15 16

15 16 15 16

zu der folgenden
Pfadspeicherspalten

Fig.6

Pfadzeile0 Startwert +3

Pfadzeile1 Startwert +1

Pfadzeile2 Startwert -1

Pfadzeile3 Startwert -3

17

18

15 16 15 16

15 16 15 16

15 16 15 16

15 16 15 16

zu der folgenden
Pfadspeicherspalten

Fig.7